# EUROPEAN PATENT APPLICATION

(11) **EP 1 146 737 A1**
(43) Date of publication of application: **17.10.2001**
(21) Application number: 01302233.0
(22) Date of filing: 12.03.2001
(51) Int. Cl.: H04N 5/76, H04N 5/782, H04N 7/173

(54) **Method and apparatus for broadcast and video signal recording**

(30) Priority: 10.03.2000 GB 0005878
(71) Applicant: BRITISH BROADCASTING CORPORATION, London W1A 1AA (GB)
(72) Inventor: Astle, John Michael, c/o British Broadcast. Corp., Tadworth, Surrey, KT20 6NP (GB); Baker, Ian David, c/o British Broadcasting Corp., London, W12 7TS (GB)
(74) Representative: Abnett, Richard Charles

(57) **Abstract**

Video programming signals are generated by a digital television broadcasting service in response to recording information entered by a user (30) at a website (60) of the broadcaster. The website contains schedule information (62) which is transmitted to the user (30). In response to user selection, an output signal is generated containing information identifying programmes to be recorded. The information includes start and finish time, date, and channel information, or may be Programme Delivery Control codes. The information also includes address information for the user's recorder. The information is multiplexed with the digital broadcast signal (26) such that video programming signals are broadcast to the user's video recorder (46). The signals are received by a digital decoder (44) which checks for a unique video identifier address that matches the user's video recorder (46). If a matching address is found the digital decoder (44) transfers the off-air video programming instructions into the memory of the video recorder (46), thus effecting video recorder programming. In an alternative embodiment (Fig.5), the video signals are broadcast over the internet and the control data is also sent to the recorder over the internet.

## Description

### Background of the Invention

This invention relates to programmable recorders and methods of programming recorders for broadcast television or sound broadcasts or other forms of video material. The terms "broadcast" and also "transmission" are used in this specification to include not only radio frequency diffusion but also other forms of dissemination such as by cable or broadband internet services.

Video recorders for recording broadcast television signals are well known in which, in order to record a desired television programme, the video user has to enter programme information into the video recorder, either through a video handset, through buttons on the video recorder casing, or through a television function menu. The programme information might be start and finish time, the date and channel, or, alternatively, it might be a programming code such as Programme Delivery Control (PDC) or Videoplus (RTM) which automatically provides the video recorder with the information it needs to record at the required time. The present arrangement works satisfactorily so long as the video user has the opportunity to review television schedules for possible programmes of interest, and has access to the video recorder to enter the programme information. However, if the video user is not present to enter programme information, it is not possible to record a program. Considering that the aim of a video recorder is to facilitate recording of programmes that are broadcast at times inconvenient for a user, this is clearly a drawback.

Conventional video recorders, therefore, disadvantage users by requiring them to ensure that, in advance of programme transmission, they are present to enter programme information and set the video recorder to record. Remote control of video recoding devices has been proposed, see for example US Patents 5,640,453; 5,692,214; and 5,414,756; United Kingdom Patent Applications 2,292,652A; 2,258,583A; and 2,230,163A; and European Patent Application 0 805 594A. European Patent Application 0 793 385A and Japanese Laid-Open Patent Application 10-177777 describe programme reservation and recording systems, and International Patent Application Publication No. WO99/65237 describes a television programme recorder which can select programmes for recording on the basis of user preference types.

It is also known for digital broadcast television signals to include individual addresses for receiving television decoders, in order to control the conditional-access permission of the viewers or users, such as with a subscription television service, see for example US Patent 4,354,201; United Kingdom Patent Application GB 2 132 860A; and European Patent Application 0 428 252A. It is also known to download multimedia or other video material to a storage device such as a personal computer over the internet.

### Summary of the Invention

The invention in its various aspects is defined in the independent claims below to which reference should now be made. Advantageous features of the invention are set forth in the appendant claims.

Embodiments of the invention are described in more detail below with reference to the drawings. In a first system embodying the invention video programming signals are generated by a digital television broadcasting service in response to a programme selection made by a viewer or user at a website of the broadcaster. The website contains schedule information which is transmitted to the user. In response to user selection, an output signal is generated containing information identifying programmes to be recorded. The information includes start and finish time and date and channel information, or alternatively takes the form of Programme Delivery Control codes. The information also includes address information in the form of a unique video identifier address for the user's video recorder. The information is multiplexed with the digital broadcast signal such that video programming signals are broadcast to the user's video recorder. The signals are received by a digital decoder which checks for a unique video identifier address that matches the viewer's video recorder. If a matching address is found, the digital decoder transfers the off-air video programming instructions into the memory of the video recorder, thus effecting video recorder programming.

In a second embodiment of the invention the control signals are generated using schedule information at the broadcaster's website, but the control signals need not be multiplexed with the transmitted signal. In this embodiment, the video signals are broadcast over the internet and the control data is also sent to the recorder over the internet.

### Brief Description of the Drawings

The present invention will now be described in more detail by way of example with reference to the drawings, in which:
**Figure 1** is a schematic diagram illustrating a first preferred system by which a user can remotely program their video recorder through a television broadcaster's computer network;
**Figure 2** is a schematic diagram illustrating in more detail the broadcaster's transmitter end of the system of Figure 1;
**Figure 3** is a schematic diagram illustrating in more detail the user's receiver end of the system in Figure 1;
**Figure 4** is a flow chart illustrating video programming signal generation and transmission according to the preferred system; and
**Figure 5** is a schematic diagram illustrating a second embodiment of the invention.

### Detailed Description of the Preferred Embodiments

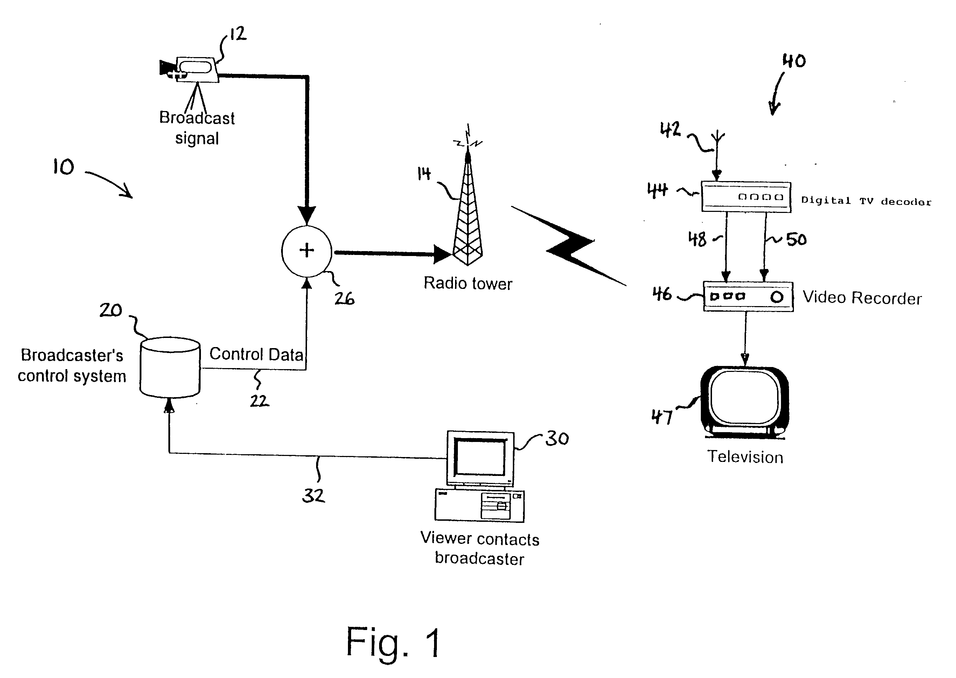

The preferred system, illustrated by Figure 1, enables a viewer or user to effect programming of a video recorder that is remote from their present location.

At the broadcaster's transmitting station 10 a conventional broadcast signal is generated such as by a camera or other signal source 12 and encoded in conventional fashion. The encoding equipment is not shown in Figure 1. The encoded transmission signal is then applied to a transmitter 14 illustrated by a radio tower in Figure 1. The transmissions may be terrestrial or satellite broadcast transmissions. The transmitting station also includes a control computer system 20 which provides control data on a line 22 to a combiner or multiplexer 26 which receives the encoded broadcast signal from the signal source 12 before application to the transmitter 14.

A user can access the broadcaster's control computer system 20. As shown this is achieved by the user using a personal computer 30, which is at a remote location such as a hotel room for example, to contact the computer system 20. The contact may be by a direct dial-up link or via the internet, this connection being indicated diagrammatically in Figure 1 by a line 32.

A receiving station 40, which may be located at a user's home, may include a receiving antenna or aerial 42 (which may be a local or a communal antenna), a digital television decoder 44 connected to the aerial 42, a home video recorder 46 connected to the output of the decoder 44, and a conventional receiver 47 connected to the output of the video recorder 46.

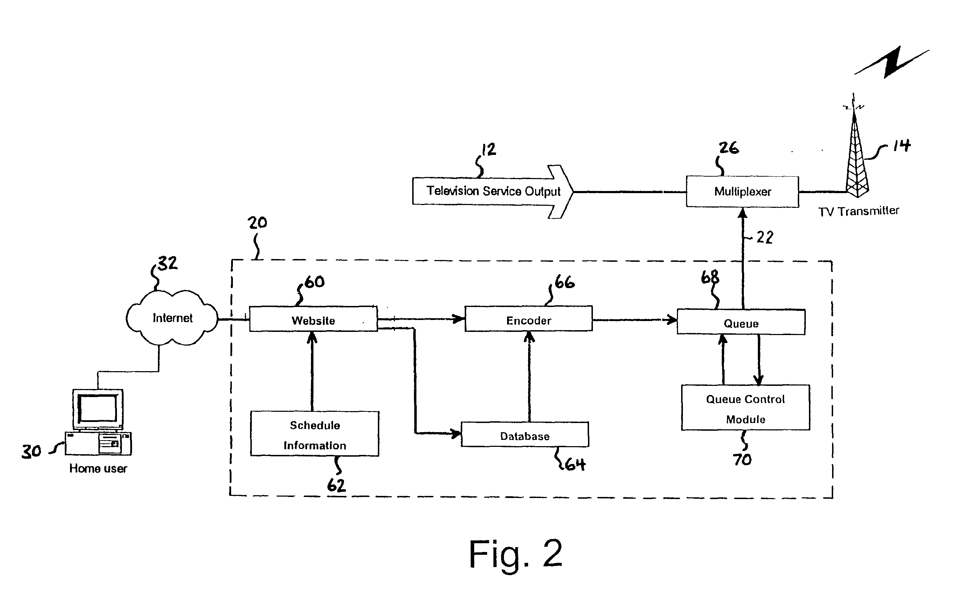

The transmitting station 10 is shown in more detail in Figure 2. Here the relevant components of the control computer system 20 and the manner in which they are controlled by the user are illustrated. The home user at a personal computer 30 can connect through the internet 32 with the broadcaster's website 60. The website may be operated by a third party on behalf of the broadcaster. The website 60 hosted on a computer is supplied with schedule information by an appropriate source 62 of this information. The information received from the user at the computer 30 via the internet and the website is passed to a database 64 and to an encoder 66, which also receives information from the database 64, as described below. The encoded information from the encoder is then placed in a queue 68 which is controlled by a queue control module 70 to apply queued items from the queue 68 to the multiplexer 26 at appropriate times. The queued and encoded items are then transmitted as part of the normal broadcast digital television signal by transmitter 14.

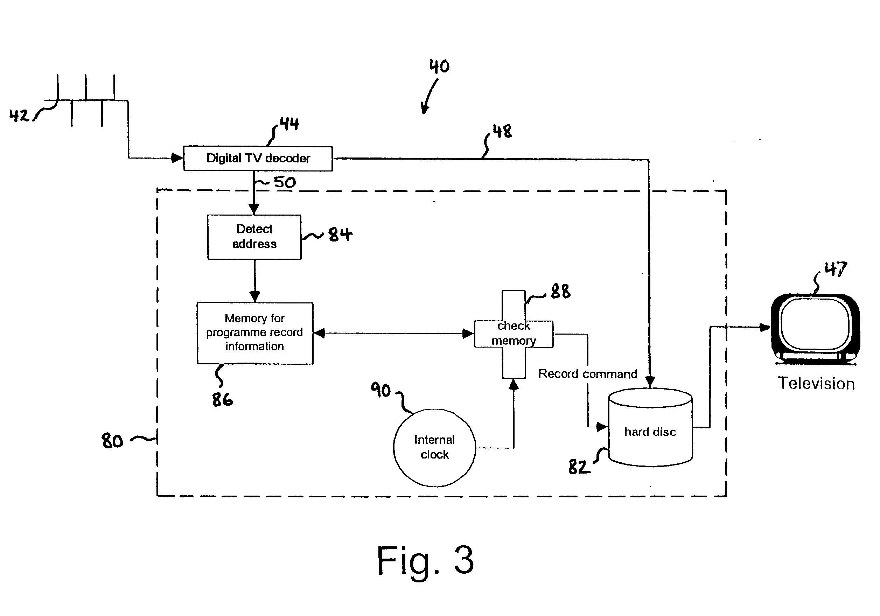

A user's receiving station is shown in more detail in Figure 3. The broadcast signal is received at the aerial 42 and applied to the digital TV decoder 44, commonly known as a "set-top box". The decoded video and audio signals are then applied to a recorder over line 48. In Figure 1 this was shown as a videotape recorder 46, whereas in Figure 3 it is assumed that the recorder 80 is based around a hard disc 82. The recorder 80 or at least the disc 82 may be accommodated within the television receiver 47 itself, or they may be in a separate unit attached to the receiver, for example using the receiver's SCART socket or other connector. The decoder 44 may also be physically part of the recorder 80.

In addition the decoder 44 has a second, data output 50 for user data. A circuit 84 is connected to this output and monitors addresses associated with each item of information transmitted in a predetermined location on the broadcast signal as defined below. Each receiving station has a unique user identifier address, and circuit 84 monitors the transmitted addresses. When it finds a message intended for its own address, it passes this message to a memory circuit 86 which stores it. The message contains information identifying a programme to be recorded. The circuit 84 could alternatively be housed in the decoder 44 rather than the recorder 80.

Associated with the hard disc 82 is a memory checking circuit 88. This periodically checks the memory 86 to determine whether any action is required at that time to cause the hard disc to start or to stop recording the incoming signal. To this end the memory checking circuit 88 is connected to an internal clock 90 at the receiver station. If programme delivery control (PDC) codes are being transmitted instead of times, then the memory checking circuit is connected to a PDC code decoder which is connected to receive data from the decoder 44.

The operation of the preferred embodiment illustrated will now be described.

In operation, a user who is not present at the receiving station 40 to program the desired video recorder in person, may contact the website 60 associated with the broadcaster's computer system 20, using the computer terminal 30. The user enters a user name and a password to enter the website. The website 60 then displays scheduling information for the broadcasting network and presents over the internet 32 an interface on the computer 30 for a user to enter programme details for recording. The programme details can be entered in various different ways, but the simplest from the user's point of view is simply to select the programme from a programme schedule. The broadcaster's website then derives from this the start and stop times and the channel number, or alternatively the appropriate programme delivery codes. The user may also need to enter address information identifying the videoplayer which is to be programmed. Alternatively, the website may previously have been supplied with the videoplayer identification for that user name. The broadcaster's computer system 20 encodes the video programming request received from the user in this way in a digital format as control data which is to be applied over line 22 to the multiplexer 26. The control data is then combined with the digital television signal 24 from the source in the multiplexer 26 and is transmitted to the user's home from the transmitter 14.

At the receiving station 40 the user's videoplayer 46 receives the video programming messages transmitted by the broadcaster, recognises any message with its own unique address identification, and downloads the associated programme information into its stored programme memory. In this way, the preferred system allows a user to remotely issue commands to their video recorder to record programmes of interest.

The data that a user needs to provide to the broadcaster's computer system through the internet to effect recording consists of a video recorder identifying address, as well as the recording details themselves, such as the date, the start time and either the duration or the finish time of the broadcast, the television channel, and whether Standard Play or Long Play (or Extended Play) is desired. In general, the user may optionally be able to determine the quality level of any recording in accordance with the programme type or genre (see below), and with the available unused recording capacity. Alternatively, instead of sending the start time and duration or finish time, the recording details can be entered as a single programme identifier code, as with the current Programme Delivery Control (PDC) system.

The broadcaster's computer system 20 is preferably configured to allow the user to enter general programme preferences for automatic recording of programmes according to type (genre) or content. If for example, the user indicates that they are interested in recording musicals or sporting events, they enter this information at the website 60 and the computer system logs it in the user database 64. Whenever the broadcaster's program schedule changes, the computer system 20 scans through the new schedule 62 and the user database 64 for programmes that match the logged preferences. If there are any television programmes that match, then the computer system can automatically issue 'record' commands to the video recorders of all users who expressed a desire to record programmes of that type. In this way, users who do not have access to the current scheduling information and therefore do not know what programs are due to be shown or at what times, can, by entering preferred programme types, ensure that their video recorder records programmes of interest in their absence.

Alternatively, a second tier of addresses can be used to command home recorders to record programmes that the broadcaster recommends. For example, one of the second tier addresses may be for all users interested in sport. The broadcaster then uses this command to inform the home recorder that a sports programme is to be transmitted. In another possible arrangement, the generic code is itself transmitted to the home receiving station. At the receiving station a determination is made as to programme content for each incoming programme. This could be done with additional codes transmitted as part of the television signal, or with the existing programme type codes transmitted on radio signals, for example, such as RDS (radio data service) codes or using the DAB (digital audio broadcasting) system.

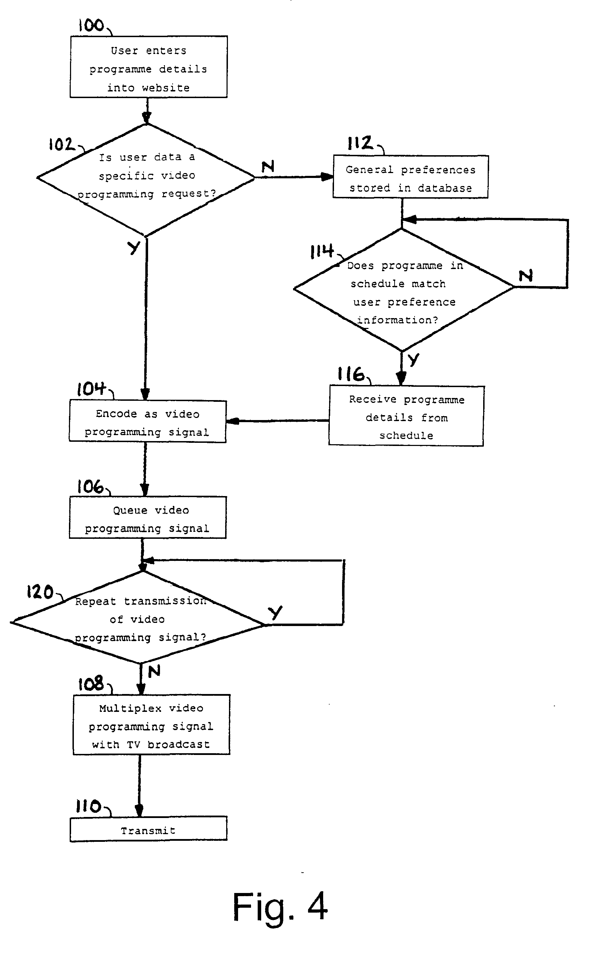

The mode of operation of the first preferred system according to the present invention will now be described in more detail with especial reference to the flow chart of Figure 4.

A user logs on to the internet at a computer terminal 30 and accesses the website 60 provided by the broadcaster. After the user has logged on to the website, the website 60 displays schedule information and such interfaces as are necessary to allow a user to select programmes they wish to record. Entering information of programmes of interest can be achieved by highlighting a program on the displayed schedule using cursor keys or the mouse pointer, by typing the programme details in at the cursor of one or more text entry windows, or by selecting 'radio' buttons to indicate more general preferences. It will be understood that there is a wide range of GUIs (Graphical User Interfaces) that the broadcaster could provide for the entering of programme details. The entering is shown at step 100 in Figure 4.

Once the viewer has confirmed that the programme details they have entered are correct, the broadcaster's computer system 20 processes the information. The system knows the address identification for the recorder to be programmed either because the user is required to enter it, or because it is stored against the particular user name, or because it is stored in the system against the calling email address, possibly using a cookie. A determination is then made, step 102, as to whether the user data is a specific or a general video programming request. If the user information relates to one or more specific record events, Y at step 102, then it is passed to the encoder 66 where it is encoded, step 104, as a video programming signal in a format suitable for transmission, and is then passed to the queue 68, step 106. Video programming signals are read from the queue sequentially, and passed to the multiplexer 26. They may be repeated, as described below. The multiplexer combines the queued user information encoded as a video programming signal with the television broadcast data from the source 12, step 108, and broadcasts it to all receivers of the television signal, step 110.

If however the user information does not specify a particular programme but specifies instead general programme preferences, N at step 102, then this information is stored or logged in the database 64 of user preference information, step 112. Each time a new television programme schedule 62 is posted to the website 60 of the broadcaster's computer network 20, the computer network compares the schedule with the preferences that have been specified by the user and stored in the database, step 114. For each match between a user preference and a television programme, Y at step 114, the computer system receives programme details from the schedule 62, step 116, and passes programme and user details to the encoder 66 to generate a specific video programming signal for transmission to the user's video recorder.

The preferred system is a digital television network, which reserves part of the MPEG transport stream used to transmit digital television broadcast signals for the transmission of digital user data. The type of data that is encoded into the video programming part of the transport stream according to the preferred system is shown in the following Table.

**TABLE**

| **Purpose of field in message** | **Number of bytes required** |
|---|---|
| Address of home recording device | 16 |
| Days ahead from time of message | 1 |
| Time | 2 |
| Duration: minutes divided by 4 | 1 |
| Channel Number | 2 |
| Total | 22 |

A total of 22 bytes are thus required with this example. If the IPv6 internet address standard is used as the addressing protocol, and 100 kb/s of the multiplex are set aside, this allows two million messages to be sent every hour. In practice a message is sent several times to ensure proper reception, and this typically reduces the channel capacity by a factor of, say, three.

To ensure that the video recorder to which a record signal is directed has received the signal, the preferred system repeats transmission of the record signal a number of times. This is illustrated at step 120 in Figure 4. Clearly the transport stream has a maximum capacity of video programming signals that it can transmit. If the transmission of video programming signals is to be repeated several times, it is possible that at certain times the number of video programming signals in the queue, including repeat signal transmissions, is so great that the transport stream approaches capacity. In such a situation there is the danger that certain video programming signals would not be transmitted in time to inform the video recorder of a programme's details. To address this problem, the queue is therefore managed by a queue control module 70 which monitors the length of the queue and how many times a video programming signal has been transmitted. The queue control module 70 adjusts the number of repeat transmissions in accordance with the load on the system, that is the length of the queue, so that it is less when the system is busy.

Each video recorder has a unique identifying address, so that a single recorder can be individually referenced and have an individual video programming signal forwarded to it. Digital televison companies are already able to individually address each digital TV decoder in order to control the conditional channel access permission of the viewer, e.g. for subscription television services. Thus, known digital TV decoders constantly monitor the incoming signal for addressing information. The circuitry required for this is therefore not described in detail. It is possible for the unique identifying address to be held on a conditional-access smart card which is inserted into the set-top box in order to enable it to descramble subscription services, rather than actually in the hardware itself. The same subscriber number as is used for the conditional-access service may also be used as the unique identifying address for the purposes of the present system.

In an alternative arrangement the recorder may include the facility for the user to enter a number allocated by the operator of the website. This number is given to the user when they first access the website. The number may be entered using the keypad conventionally found on a video recorder or by means of a remote control.

Figure 3 illustrates the reception of an incoming video programming signal according to the preferred system using a hard disc 82. The digital decoder 44 employed in this system intercepts the incoming combined digital televison/video programming signal, and constantly monitors and processes the user data part, checking for an address that corresponds to an associated video recorder. If a matching address is found for the video recorder, then the processed data from the video programming signal is passed to the memory 86 of the video recorder, which can then record the program on the hard disc 82 in the usual way.

Although the preferred system uses the separate digital decoder 44 to intercept and decode the video programming signal or control data for the video recorder, it is appreciated that the decoding circuitry for video record transmission might alternatively be housed in the video recorder itself.

Hard disc video recorders are now becoming available and are anticipated to have recording times of tens of hours. This figure will doubtless increase as advances in computer technology allow hard discs with larger and larger capacity to be built. The advantages of the preferred system are particularly apparent when used in conjunction with a hard disc video recorder, since a viewer can then set up their video recorder to record programmes of interest while they are away for an extended period. This would not really have been possible in practice with the standard three hour cassette tapes used in conventional video recorders because the tape would be soon used up and would need to be replaced. With a hard disc video recorder, a user is assured of much more space in which to record. Furthermore, not knowing the program schedule in advance is no longer a hindrance, since a user can program their video recorder while they are away from home. Even if a user has no access to the broadcaster's website while away, providing their programme preferences are entered into the website in advance, the broadcaster's computer network will program their video recorder to record programmes matching the profile.

Magnetic hard discs may be replaced by optical discs in the future and the expression 'hard disc' as used herein is intended to cover such discs. Further, future advances in memory capacity may make it possible to use solid state semi-conductor memories in place of the hard disc.

The above description describes how the user data sent by the broadcaster to the user's video recorder sets the required start and stop times. It will also usually set the channel on which the required programme is transmitted. However the data itself may not be transmitted on the same channel as the programme to be recorded. Accordingly, after the recording has been made, the video recorder is arranged to tune back to a predetermined channel, previously selected by the user as a default channel. This reverting to the default channel preferably takes place after a short pre-determined delay, otherwise it may cause confusion or conflicts with manual operation when the user is at home. The identification of the default channel may be set via the broadcaster's website and transmitter to the recorder in similar manner to the programme commands. Some current video recorders, notably those built into television receivers, are provided with twin tuners. With these receivers, one tuner remains tuned to the data carrying channel and the other tuner is tuned to the channel carrying the programme which is to be recorded. With a cable distribution system the tuning operation may be more correctly termed a selection operation.

In the system described, it has been assumed that the user will use a personal computer 30 at the remote location in order to instruct the broadcaster's computer system to transmit control signals to their video recorder. Instead of a personal computer 30, other devices can be used such as, for example, wireless application protocol (WAP) telephones. In this way the user can programme their recorder when on the move or at any location where their telephone will operate.

In another modification, the broadcaster may have the option of transmitting a command that enables all recorders or a group of recorders to record at a given time or on receipt of the command.

It will be appreciated that many other modifications may be made to the system described. For example the system can be adapted for radio signals and audio recording or to any other medium for distributing programmes according to a schedule.

In a modified system, the receiving/recording equipment may be connected to a cable television network rather than receiving signals directly from terrestrial or satellite broadcasts via a local or communal antenna. Cable TV operators or service providers commonly present television channels in a different order or multiplex configuration to those broadcast to air, such that they may have channel numbers particular to the cable system in question. In these circumstances the cable service provider rather than the broadcaster may operate the website 60 on which the user selects items for recording. Information for the recorder 80 may be distributed within a digital multiplex or may be carried on a dedicated path within the cable network. Since internet traffic is carried by such networks, there are advantages in an integrated recorder having a separate port which has a permanent internet connection for receiving recording information. Such an arrangement also enables the recorder to acknowledge receipt of recording information, and report available remaining recording time or capacity either to a remote user or to the website operator.

In the above configurations the recorder has been described in modes applicable to recording conventional linear (sequential) radio or television programmes. However, such digital recording devices can capture interactive television and multimedia content, including digital displays, or other content which may be delivered by broadcast cable, internet or broadband connections which optionally may convey the content in non-real time. However, by means of the web site and the recording information passed to the user's home equipment, there is significant advantage to the user, in that the user need not be concerned about the actual time(s) of the transfer. All he needs to do is select it on the website.

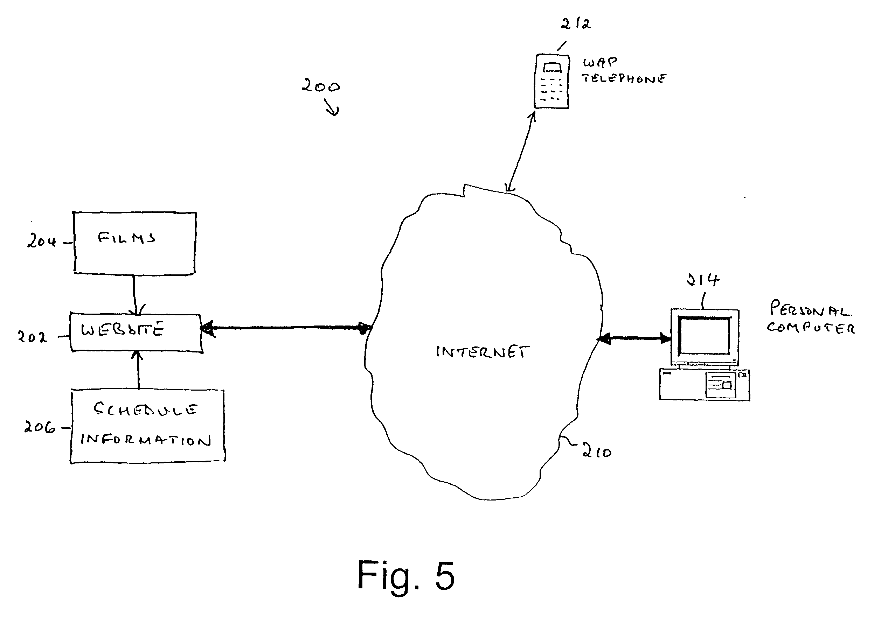

A second embodiment of the invention will now be described with reference to Figure 5. The second embodiment comprises a system 200 which includes at a broadcaster's station a website 202 which has access to a plurality of cinematographic films 204 or other video material, which term includes multimedia material. The website 202 also has access to schedule information 206 which indicates when each film is to be transmitted. The website is connected to and accessible from the internet 210. Also connected to the internet are a WAP mobile telephone 212 and a personal computer 214, both belonging to the user.

The manner in which the system of Figure 5 operates is as follows. The user uses the WAP telephone 212 to access the website 202 via the internet 210. The user identifies himself to the website using a user name and password. Directly or indirectly, as previously discussed, he also identifies a recording device to the website, where he desires a film to be recorded. The website displays over the internet to the user a schedule of available films which are to be transmitted in the near future, and the user makes a selection over the internet of the film which he wishes to record. The selection is done in any of the ways discussed above, e.g. highlighting the desired item in a displayed list. Thus the film which the user desires to record is identified to the website. The user now terminates the WAP telephone call.

The website now sends to the personal computer information which identifies the film to be transmitted. The form of this data is not important; it may be start and stop times or it may be a code similar to a PDC code with on-air broadcast television. The personal computer stores this information received over the internet from the website.

The personal computer now monitors films transmitted or streamed from the website over the internet. The films may not be transmitted at full viewable rate but may be transmitted at a slower rate. The computer monitors the transmissions and uses the downloaded information such as start and stop times and records the desired film, in a manner similar to the off-air monitoring of the first embodiment. In this way the film is recorded on the hard disc of the personal computer and can subsequently be replayed at viewable speed.

In this arrangement it is possible for the initial instructions to be initiated by the user from the personal computer 214 instead of from the WAP telephone 212. In that case only two locations are involved rather than three.

It will be appreciated by those skilled in the art that other modifications may be made to the second embodiment shown in Figure 5 within the scope of the appended claims.

## Claims

1. Apparatus for programming a video recorder, comprising:
at a broadcaster location:
information receiving means (32,60,64; 202) for receiving information identifying a recorder at a recorder location;
generating means (60, 62, 66, 68, 70; 202,206) coupled to the information receiving means and including means containing schedule information and for transmitting the schedule information to a user, and, in response to user selection, generating a data output signal containing information identifying the recorder and at least one video item to be recorded by the recorder; and
transmitting means (68,70; 202)for transmitting the data output signal and for transmitting video items; and
located remotely from the broadcaster location:
a video signal recording device (46; 214);
signal receiving means (44; 214) for receiving the transmitted video items;
data store means (84,86; 214) for receiving and storing the data output signal for that recorder from the generating means at the broadcaster location;
means coupled to the data store means (88; 214) for determining whenever a video item identified by the stored information is being transmitted and in response thereto activating the video signal recording device; and
user-operable means (30; 212; 214) for transmitting to the broadcaster location information identifying a recorder at a recorder location, for receiving schedule information transmitted from the generating means at the broadcaster location, and for sending user selections from the transmitted schedule information to the broadcaster to identify video items to be recorded by the recorder at the recorder location.

2. Apparatus according to claim 1, in which the video signal recording device comprises a personal computer (214).

3. Apparatus according to claim 1 or 2, in which the user-operable means comprises a mobile telephone (212).

4. Apparatus according to any of claims 1, 2 or 3, in which the user-operable means (30; 212; 214) transmits to the broadcaster location by means of a computer network, preferably the internet (32; 210).

5. Apparatus according to claim 4, in which the user-operable means comprises a personal computer (30; 214).

6. Apparatus according to any of claims 1 to 5, in which the video items are transmitted in digital form.

7. Apparatus according to any of claims 1 to 6, in which the broadcast signal recording device comprises a hard disc recorder (82; 214).

8. A method of programming a video recorder, comprising the steps of:
transmitting to a broadcaster location, in response to user input, information identifying a video recorder at a recorder location;
receiving, at a broadcaster location, from the user, the location information identifying the recorder and transmitting to the user schedule information;
sending from the user to the broadcaster location user selections to identify video items to be recorded by the recorder;
generating from the received user selections a data output signal containing information identifying the recorder and at least one video item to be recorded by the recorder;
transmitting the data output signal and transmitting the video items;
receiving and storing the data output signal at the recorder;
receiving the transmitted video items at the recorder;
determining whenever a video item identified by the stored data is being transmitted and in response thereto activating the recorder.

9. Apparatus for programming a broadcast signal recorder, comprising:
at a broadcaster location:
information receiving means (32; 60,64) for receiving information identifying a recorder at a recorder location and a programme or programme type to be recorded by the recorder;
generating means (60,62,66,68,70) coupled to the information receiving means for generating an output signal containing information identifying the recorder and the programme or programme type to be recorded by the recorder;
multiplexing means (26) coupled to the generating means for multiplexing the output signal with a broadcast signal; and
transmitting means (14) coupled to the multiplexing means to transmit the multiplexed signal;
at a recorder location:
a broadcast signal recording device (46);
signal receiving means (42) for receiving the transmitted multiplexed signal;
decoder means (44) coupled to the signal receiving means for separating the transmitted multiplexed signal into a broadcast signal and a data signal containing information identifying a recorder and the programme or programme type to be recorded by the recorder;
address detector means (84) coupled to the decoder means for detecting when the information identifying a recorder in the data signal identifies that particular recorder at the recorder location;
programme data store means (86) coupled to the address detector means and operative when the address detector means determines that the recorder identifying information in the data signal identifies that particular recorder at the recorder location to store the programme or programme type identifying information; and
means (88) coupled to the programme data store means for determining whenever a programme or programme type identified by the stored information is being transmitted and in response thereto to activate the broadcast signal recording device; and
at a user location remote from the recorder location and the transmitter station:
user-operable means (30) for transmitting to the broadcaster location information identifying a recorder at a recorder location and a programme or programme type to be recorded by the recorder.

10. Apparatus according to claim 9, in which the broadcast signal is a broadcast television signal.

11. Apparatus according to claim 9 or 10, in which the user-operable means at the user location comprises a personal computer (30).

12. Apparatus according to claim 9 or 10, in which the user-operable means at the user location comprises a mobile telephone.

13. Apparatus according to any of claims 9 to 12, in which the user-operable means transmits to the broadcaster location by means of a computer network, preferably the internet (32).

14. Apparatus according to any of claims 9 to 13, in which the user-operable means transmits to the broadcaster location by means of telephone communication (32).

15. Apparatus according to any of claims 9 to 14, in which the broadcast signal is a digital signal and the transmitting means is constructed to transmit a digital signal.

16. Apparatus according to any of claims 9 to 15, in which the generating means is arranged to repeat the individual output signal.

17. Apparatus according to claim 16, in which the generating means (68,70) is arranged to vary the number of repeats in dependence upon the number of items of information to be transmitted.

18. Apparatus according to any of claims 9 to 17, in which the broadcast signal recording device is a tape recorder (46).

19. Apparatus according to any of claims 9 to 17, in which the broadcast signal recording device is a hard disc recorder (82).

20. Apparatus according to any of claims 9 to 19, in which the means (88) for determining whenever a programme or programme type identified by the stored information is being transmitted is arranged to compare timing information stored in the programme data store means with current time information.

21. Apparatus according to any of claims 9 to 20, in which the means (88) for determining whenever a programme or programme type identified by the stored information is being transmitted is arranged to detect received programme delivery codes in the signal received at the receiver location and to compare the received codes with codes stored in the programme data store means.

22. Apparatus according to any of claims 9 to 21, in which the information receiving means (60) at the broadcaster location includes means for receiving a user identification from the user.

23. Apparatus according to claim 22, in which the information receiving means (60) includes means for issuing a new user with a unique user identification.

24. Apparatus according to claim 22, in which the address detector means (84) at the recorder location is incorporated with a conditional access enabling device.

25. Apparatus according to any of claims 9 to 24, in which at the recorder location the means (88) for activating the broadcast signal recording device is operative to tune the broadcast signal recording device to a reception channel when a programme is to be recorded, and, after the programme has been recorded, to retune the broadcast signal recording device to a predetermined default channel to receive the data signal again.

26. Apparatus according to any of claims 9 to 25, in which the generating means at the broadcaster location includes means (60,62) containing schedule information and for transmitting the schedule information to a user, and in response to user selection, generating the output signal containing information identifying programmes to be recorded.

27. A method of programming a broadcast signal recorder, comprising the steps of:
at a user location:
transmitting, in response to user input, information identifying a recorder at a recorder location and a programme or programme type to be recorded by the recorder;
at a broadcaster location:
receiving from the user location information identifying the recorder and a programme or programme type to be recorded by the recorder;
generating from the received information an output signal containing information identifying the recorder and the programme or programme type to be recorded by the recorder;
multiplexing the output signal with a broadcast signal; and
transmitting the resultant multiplexed signal; and
at a recorder location:
receiving the transmitted multiplexed signal;
separating the transmitted multiplexed signal into a broadcast signal and a data signal containing information identifying a recorder and the programme or programme type to be recorded by the recorder;
detecting when the information identifying a recorder in the data signal identifies that particular recorder location;
storing, when the address detector means determines that the recorder identifying information in the data signal identifies that particular recorder at the recorder location, the programme or programme type identifying information; and
determining whenever a programme or programme type identified by the stored information is being transmitted and in response thereto activating the broadcast signal recording device.

28. Apparatus for use in the method of claim 27 for transmitting a multiplexed broadcast signal, the apparatus comprising:
information receiving means (32,60,64) for receiving information identifying a recorder at a recorder location and a programme or programme type to be recorded by the recorder;
generating means (60-70) coupled to the information receiving means for generating an output signal containing information identifying the recorder and the programme or programme type to be recorded by the recorder;
multiplexing means (26) coupled to the generating means for multiplexing the output signal with a broadcast signal; and
transmitting means (14) coupled to the multiplexing means to transmit the multiplexed signal.

29. Apparatus for use in the method of claim 27 for programming a broadcast signal recording device, the apparatus comprising:
a broadcast signal recording device (46);
signal receiving means (42) for receiving a transmitted multiplexed signal;
decoder means (44) coupled to the signal receiving means for separating the transmitted multiplexed signal into a broadcast signal and a data signal containing information identifying a recorder and the programme or programme type to be recorded by the recorder;
address detector means (84) coupled to the decoder means for detecting when the information identifying a recorder in the data signal identifies that particular recorder at the recorder location; and
programme data store means (86) coupled to the address detector means and operative when the address detector means determines that the recorder identifying information in the data signal identifies that particular recorder at the recorder location to store the programme or programme type identifying information; and
means (88) coupled to the programme data store means for determining whenever a programme or programme type identified by the stored information is being transmitted and in response thereto activating the broadcast signal recording device.

30. A digital multiplexed broadcast signal comprising a digital broadcast signal, multiplexed with a data signal, the data signal containing addresses identifying individual signal recorders and containing information associated with the addresses identifying programmes or programme types to be recorded by the recorders.

31. A signal according to claim 30, in which the digital broadcast signal comprises a digital video signal.
